# EUROPÄISCHE PATENTSCHRIFT

(11) **EP 3 368 801 B1**
(45) Veröffentlichungstag und Bekanntmachung des Hinweises auf die Patenterteilung: **21.08.2024**
(21) Anmeldenummer: 16785169.0
(22) Anmeldetag: 24.10.2016
(51) Int. Cl.: F04D 29/10

(54) **ANORDNUNG ZUR WELLENDICHTUNG**
SHAFT SEALING ARRANGEMENT
SYSTÈME POUR ASSURER L'ÉTANCHÉITÉ D'UN ARBRE

(30) Priorität: 30.10.2015 DE 102015221255
(43) Veröffentlichungstag der Anmeldung: 05.09.2018
(73) Patentinhaber: KSB SE & Co. KGaA, 67227 Frankenthal (DE)
(72) Erfinder: LEBER, Daniel, 67227 Frankenthal (DE); WIESNER, Hermann, 67227 Frankenthal (DE)
(86) Internationale Anmeldenummer: PCT/EP2016/075504
(87) Internationale Veröffentlichungsnummer: WO 2017/072065

(56) Entgegenhaltungen:
- EP-A1- 1 921 356
- EP-A2- 0 959 277
- WO-A1-2014/081901
- DE-A1- 19 928 141
- DE-U1- 20 205 419
- US-A1- 2008 181 546
- US-A1- 2013 259 679

## Beschreibung

Die Erfindung betrifft eine Anordnung zur Wellendichtung mit einer Paarung, die ein rotierendes Element und ein stationäres Element aufweist, die einen Dichtspalt für einen Schmierfilm ausbilden sowie eine Kreiselpumpeneinheit mit einer solchen Anordnung.

Solche Wellendichtungen kommen beispielsweise bei Kreiselpumpen zum Einsatz, an der Durchführung der rotierenden Welle aus dem Pumpengehäuse.

Gleitringdichtungen weisen einen Dichtspalt auf, der in der Regel rechtwinklig zur Wellenachse steht. Wellendichtungen dieser Bauart werden auch als axiale oder hydrodynamische Gleitringdichtungen (GLRD) bezeichnet. Solche Gleitringdichtungen (GLRD) benötigen gegenüber anderen Dichtungssystemen einen kleineren Raum und weisen einen geringeren Wartungsaufwand auf. Sie bewähren sich sowohl bei niedrigen als auch bei hohen abzudichtenden Drücken bzw. Umfanggeschwindigkeiten.

Im Betrieb gleiten Dichtflächen aufeinander, die durch hydraulische und/oder mechanische Kräfte aufeinander gedrückt werden. Zwischen diesen beiden feinst bearbeiteten Gleitflächen befindet sich ein Dichtspalt mit einem meist flüssigen Schmierfilm. Die geringe Leckage gelangt bei Gleitringdichtungen (GLRD) meist beim Austritt in die Atmosphäre.

Die gattungsgemäße Anordnung zur Wellendichtung weist eine Wellenhülse auf. Wellenhülsen können die Welle vor Verschleiß schützen. Treten Verschleißerscheinungen auf, so muss nur die deutlich preiswertere Wellenhülse ausgetauscht werden und nicht die gesamte Welle.

Auch kann die Wellenhülse aus einem höherwertigeren Werkstoff gefertigt sein, der beständiger gegen Verschleiß und Korrosion ist. Dies spart Kosten gegenüber einer Ausführung der gesamten Welle aus diesem Werkstoff.

In der DE 199 28 141 A1 wird eine Dichtungsanordnung beschrieben, bei der eine Welle durch ein Gehäuse einer Kreiselpumpe geführt wird. Die Anordnung umfasst eine Wellenhülse, auf der Gleitringdichtungen mit einem rotierenden Element und einem stationären Element positioniert sind, zwischen denen ein Dichtspalt für einen Schmierfilm angeordnet ist.

Die DE 202 05 419 U1 beschreibt eine Gleitringdichtungsanordnung mit einer Paarung zusammenwirkender Elemente, von denen eines drehfest an einem stationären Bauteil und das andere zur gemeinsamen Drehung an einem rotierenden Bauteil montiert ist. Eine Paarung umfasst eine Wellenhülse zur gemeinsamen Drehung mit der Welle, auf der ein erstes Element angeordnet ist. Das erste Element wirkt zusammen mit einem zweiten Element, das drehfest am Gehäuse gehalten ist.

In der DE 298 00 616 U1 wird eine Doppel-Gleitringdichtung beschrieben. Ein dynamischer Gleitring ist an einer auf einer Welle angeordneten Wellenhülse befestigt.

Die WO 95/14 185 A1 offenbart eine Gleitringdichtung zur Abdichtung einer durch ein Gehäuse hindurchtretenden Welle. An einer Wellenhülse ist ein Gegenring befestigt. Ein Gleitring ist über eine Halterung dicht mit dem Gehäuse verbindbar. Die Anordnung weist ein Federelement zum Anpressen des Gleitrings an den Gegenring auf.

Die US 2008/181546 A1 beschreibt eine axiale Gleitlageranordnung mit einem Druckring, der für eine gemeinsame Drehung mit einer rotierenden Komponente vorgesehen ist. Der Druckring hat eine radiale Dichtungsfläche an einer seiner Endflächen zum Zusammenwirken mit einer radialen Dichtungsfläche eines nicht rotierenden Dichtungsrings.

Die EP 1 921 356 A1 zeigt eine Gleitringdichtung, die eine abzudichtende Welle umschließt, umfassend einen Gegenring, wobei die Welle einen Bestandteil der Gleitringdichtung bildet und einstückig ineinander übergehend und materialeinheitlich mit dem Gegenring ausgebildet ist.

Die US2013/259679 A1 offenbart eine Dichtungsanordnung, die eine Barriere zwischen dem Innen- und Außenbereich eines Kompressors bildet. Die Dichtungsbaugruppe umfasst eine primäre Dichtungsstufe und eine sekundäre Dichtungsstufe.

In der EP 0 959 277 A2 wird eine Dichtungsanordnung für eine Tauchmaschine gezeigt. Die Dichtungsanordnung ist als eine leicht austauschbare Einheit aus zwei Gleitringdichtungen mit einem Zwischenraum für eine Sperrflüssigkeit ausgebildet, in dem eine Pumpe zur Umwälzung der Flüssigkeit angeordnet ist.

Die DE 199 28 141 A1 beschreibt eine Dichtungsanordnung, bei der ein Rotationsteil durch ein Bauteil hindurchgeführt ist und das Bauteil mindestens einen Dichtungsraum zur Aufnahme von einer oder mehreren Gleitringdichtungen aufweist.

Die DE 202 05 419 U1 offenbart eine Gleitring-Dichtungsanordnung mit wenigstens einem Paar zusammenwirkender Gleitringe, von denen einer drehfest an einem stationären Bauteil und der andere zur gemeinsamen Drehung mit einem rotierenden Bauteil montiert ist.

Die WO 2014/081901 A1 zeigt eine Vorrichtung gemäß dem Oberbegriff des Anspruchs 1, aufweisend ein berührungsloses Lager, wobei eine poröse Verengung und Stege so konfiguriert sind, dass sie sich nur um einen definierten Betrag verformen, der durch den Differenzdruck zwischen jeder Seite der porösen Verengung entsteht.

Herkömmliche Anordnungen zur Wellendichtung weisen nur eine unzureichende Abdichtung oder zu große Abmessungen auf. Dies ist insbesondere bei Wellen mit kleinen Durchmessern problematisch.

Aufgabe der Erfindung ist es, eine Anordnung zur Wellendichtung anzugeben, die eine möglichst geringe Leckage und eine kompakte Bauweise auch bei Wellen mit kleineren Durchmessern aufweist. Die Anordnung soll sich, insbesondere beim Einsatz in Kreiselpumpen, durch eine hohe Zuverlässigkeit und eine lange Lebensdauer auszeichnen. Sie soll zudem eine einfache Montage gewährleisten sowie für Wartungsarbeiten gut zugänglich sein. Weiterhin soll sich die Anordnung durch möglichst geringe Herstellungskosten auszeichnen.

Diese Aufgabe wird erfindungsgemäß durch eine Anordnung mit den Merkmalen des Anspruchs 1 und eine Kreiselpumpeneinheit mit den Merkmalen des Anspruchs 11 gelöst. Bevorzugte Varianten sind den Unteransprüchen, der Beschreibung und den Zeichnungen zu entnehmen.

Erfindungsgemäß ist das rotierende Element einstückig mit der Wellenhülse der Anordnung ausgebildet. Die Wellenhülse bildet durch eine Abwinkelung den rotierenden Gegenring einer Gleitringdichtung. Dadurch wird ein Dichtspalt gebildet, der im Wesentlichen rechtwinklig zur Wellenachse steht.

Die Anordnung weist ein Federelement zur Erzeugung einer Anpresskraft zwischen dem rotierenden Element und dem stationären Element der Paarung auf. In Kombination mit einem gefederten Gleitring, der axial verschieblich ausgeführt ist, wird dadurch eine kompakte Gleitring-Gegenring-Paarung geschaffen, die auch bei Wellen mit kleineren Durchmessern eine zuverlässige Abdichtung und gleichzeitig eine kompakte Bauweise gewährleistet.

Die erfindungsgemäße Konstruktion nimmt gegenüber herkömmlichen stationären Gleitringdichtungen einen geringeren Platzbedarf in Anspruch bei einer vergleichsweise geringen Leckage. Ein weiterer Vorteil der Erfindung besteht darin, dass in der Regel der Einbauraum von Standardnormdichtungen, insbesondere nach DIN EN 12756, beibehalten werden kann.

Bei Kreiselpumpeneinheiten weist der Gehäusedeckel eine Öffnung auf, in welche die Anordnung zur Wellendichtung platziert wird. Es muss lediglich der Gehäusedeckel für die erfindungsgemäße Integration der Anordnung angepasst werden.

Bei Kreiselpumpeneinheiten bildet die Wellenhülse erfindungsgemäß eine Gleitfläche auf der Atmosphärenseite. Durch die Funktionsintegration von Wellenhülse und Gleitfläche wird eine platzsparende Bauweise auch für sehr enge Raumverhältnisse geschaffen.

Bei einer günstigen Variante der Erfindung ist das Federelement stationär. Dazu ist das Federelement an einem stationären Bauteil angeordnet. Dieses Bauteil führt keine Rotationsbewegungen aus. Somit steht das Federelement still und verursacht keine Vibrationen. Durch die stationäre Anordnung werden Einflüsse der Wellendurchbiegung auf die Standzeit und Dichtwirkung der Gleitringdichtung minimiert.

Bei einer bevorzugten Variante ist das Federelement zwischen dem stationären Element und einem Gehäuseteil angeordnet. Das Federelement stützt sich dabei an den Gehäuseteilen ab und wirkt eine axiale Kraft auf das als Gleitring ausgebildete stationäre Teil aus, so dass dieses gegen das als Gleitring ausgebildete rotierende Teil gepresst wird. Das Federelement ist dabei vorzugsweise an einem Gehäuse für die Dichtung angeordnet.

Erfindungsgemäß ist die Wellenhülse von einem ringartigen Element gegen axiale Verschiebungen gesichert. Dazu eignet sich insbesondere ein Flachdraht-Sicherungsring, der in einer Nut der Welle montiert ist, wobei die Anordnung der Nut entsprechend Standardnormdichtungen beibehalten werden kann. Die Wellenhülse weist eine ringförmige Aussparung auf, in welche das ringartige Element eingreift. Die axiale Wand der Aussparung bildet einen Anschlag, so dass eine axiale Verschiebung verhindert wird.

Erfindungsgemäß steht die Wellenhülse mit einem rotierenden Trägerelement in Verbindung. Dieses bildet einen Anschlag für die Wellenhülse, so dass axiale Verschiebungen verhindert werden.

Erfindungsgemäß ist die Wellenhülse zwischen dem Trägerelement und dem ringartigen Element fixiert.

Das stationäre Element wird erfindungsgemäß von einem Gehäuseteil zumindest teilweise umschlossen. Dieses Dichtungsgehäuse schützt den gefederten Gleitring und bildet einen Raum für das Fluid, welches den Dichtspalt zwischen dem Gleitring und dem von der Wellenhülse gebildeten Gegenring schmiert.

Erfindungsgemäß weist die Anordnung einen stationären Träger auf, der mit einem stationären Gehäuseteil verbunden ist. Dabei kommt bevorzugt eine nicht lösbare Verbindung zur Anwendung, wobei sich insbesondere eine Klebeverbindung eignet. Im Unterschied zu herkömmlichen Konstruktionen erfolgt die Verbindung somit nicht über Schrauben oder ähnlichen Festigungsmitteln, sondern über Klebenähte.

Der stationäre Träger dient erfindungsgemäß als Träger für einen weiteren Gleitring, der ein weiteres stationäres Teil bildet. Dieses steht mit einem weiteren rotierenden Teil in Verbindung, das vorzugsweise als weiterer Gegenring ausgebildet ist. Bei dieser Variante umfasst die Anordnung somit zwei Gleitring-Gegenring-Paarungen, wobei erfindungsgemäß bei mindestens einer Paarung ein rotierender Gegenring von einer Wellenhülse gebildet wird.

Diese Ausbildung als Doppeldichtungsmodul eignet sich insbesondere für den Einsatz bei Abwasserpumpen. Die Kreiselpumpe wird mit zwei Gleitringdichtungen abgedichtet, die von einer Flüssigkeit geschmiert werden.

Vorzugsweise sind die beiden Dichtungen in Tandem-Anordnung positioniert. Dabei ergibt sich geeigneter Weise folgender Aufbau: Erster rotierender Gegenring, erster stationärer Gleitring, zweiter rotierender Gegenring, zweiter stationärer Gleitring.

Als günstig erweist es sich, wenn beide Federelemente, die auf die axial verschieblichen stationären Gleitringe wirken, in stationären Bauteilen angeordnet sind.

Bei der erfindungsgemäßen Dichtungspatrone in Tandem-Anordnung ist die Dichtfunktion der motorseitigen Gleitringdichtung des Doppeldichtungsmoduls auch bei Versagen der pumpenseitigen Gleitringdichtung gegeben.

Die Federelemente können in unterschiedlichen Bauweisen ausgeführt sein. So können beispielsweise Gruppenfedern als konzentrisch angeordnete Federpakete zum Einsatz kommen. Weiterhin ist der Einsatz von Metallfaltenbälgen oder Wellfedern als Federelemente denkbar. Auch kann ein aus einem Elastomer gefertigter Balg als Federelement zum Einsatz kommen.

Bei dem Doppeldichtungsmodul steht das weitere stationäre Element mit einem stationären Träger in Verbindung. Alternativ oder ergänzend kann das weitere rotierende Element mit einem rotierenden Träger in Verbindung stehen.

Weitere Merkmale und Vorteile der Erfindung ergeben sich aus der Beschreibung eines Ausführungsbeispiels anhand von Zeichnungen und aus den Zeichnungen selbst.

Dabei zeigt
- Figur 1: einen Schnitt durch eine Kreiselpumpeneinheit,
- Figur 2: einen Schnitt durch eine Anordnung zur Wellendichtung.

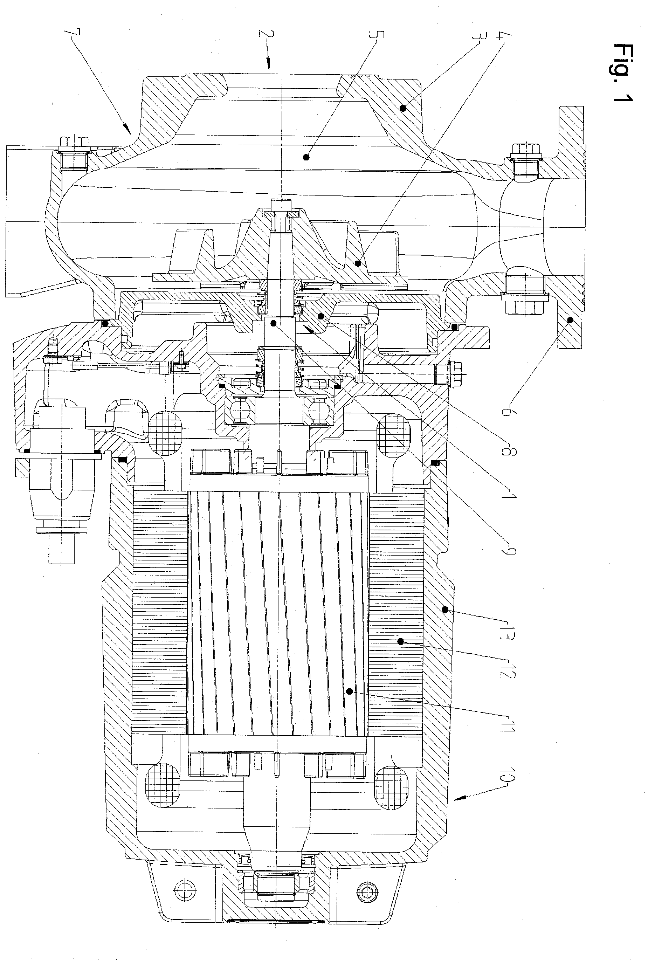

Figur 1 zeigt eine Kreiselpumpeneinheit mit einer Anordnung 1 zur Wellendichtung. Die im Ausführungsbeispiel dargestellte Kreiselpumpeneinheit wird zum Fördern von Schmutzwässern in der Abfallwirtschaft und der Industrie eingesetzt, insbesondere von ungeklärten Abwässern mit langfaserigen oder festen Beimengungen, luft- und gashaltigen Flüssigkeiten sowie Roh-, Belebt- und Faulschlamm.

Durch einen Saugmund 2 tritt das Medium in die als Freistrompumpe ausgeführte Kreiselpumpe ein. Zwischen einer saugseitigen Gehäusewand 3 und einem Laufrad 4 ist ein Raum 5 angeordnet, der einen Durchgang auch für Feststoffe ermöglicht. Dabei bildet der Kugeldurchgang ein Maß für den maximalen Durchmesser den Feststoffteilchen haben dürfen, um verstopfungsfrei die Pumpe zu passieren.

Das Laufrad 4 ist als Freistromrad ausgeführt. Durch einen Druckstutzen 6 verlässt das Medium die Pumpe. Der mit Medium gefüllte Raum 5 wird von einem Pumpengehäuse 7 und einem Gehäusedeckel 8 begrenzt.

Das Laufrad 4 ist drehfest mit einer Welle 9 verbunden, welche das Laufrad 4 mittels einer Motoranordnung 10 antreibt. Die Motoranordnung 10 umfasst einen Rotor 11, einen Stator 12 und ein Motorgehäuse 13.

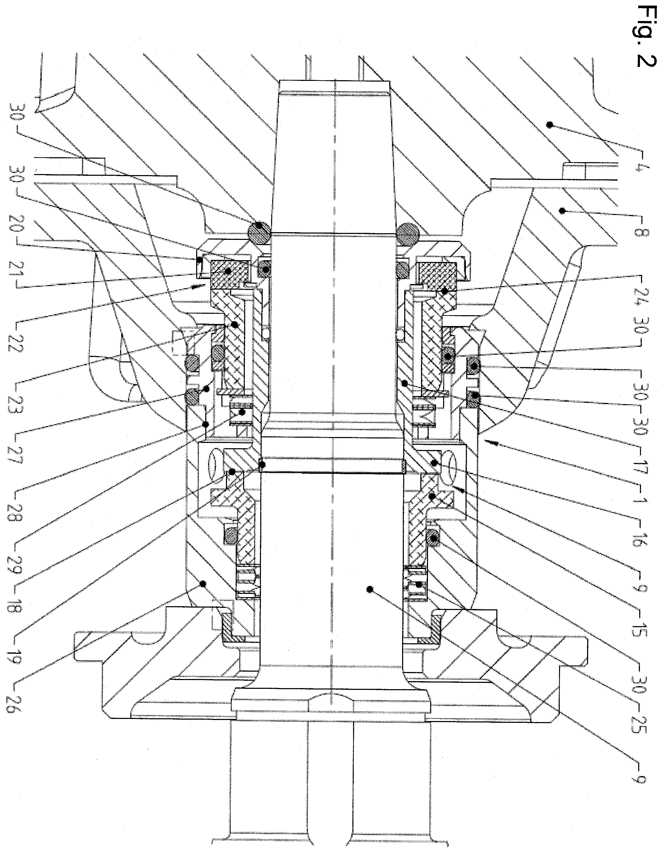

Figur 2 zeigt eine Anordnung 1 zur Wellendichtung, die in einer Öffnung des Gehäusedeckels 8 positioniert ist.

Die Anordnung 1 umfasst eine erste Paarung 14 mit einem ersten stationären Element 15, das als axial beweglicher Gleitring ausgeführt ist.

Erfindungsgemäß weist die Anordnung 1 ein zu dem stationären Element 15 korrespondierendes erstes rotierendes Element 16 auf, das einstückig mit einer Wellenhülse 17 ausgebildet ist.

Die Wellenhülse 17 ist L-förmig abgewinkelt und bildet einen flanschartigen Vorsprung, so dass eine Dichtfläche geschaffen wird, die einen senkrecht zur Wellenachse verlaufenden Dichtspalt 18 bildet.

Die Wellenhülse 17 ist drehfest mit der Welle 9 verbunden und bildet das als Gegenring ausgeführte erste rotierende Element 16 der ersten Gleitringdichtung.

Die Wellenhülse 17 weist eine ringförmige Aussparung an ihrem motorseitigen Ende auf, in welche ein als Flachdraht-Sicherungsring ausgeführtes ringartiges Element 19 eingreift und dadurch die Wellenhülse 17 gegen axiale Verschiebungen sichert.

Das ringartige Element 19 ist in einer Nut der Welle 9 angeordnet.

Pumpenseitig wird die Wellenhülse 17 von einem rotierenden Trägerelement 20 gegen axiale Verschiebungen gesichert. Das rotierende Trägerelement 20 bildet einen Träger für ein weiteres rotierendes Element 21, welches den Gegenring einer weiteren Paarung 22 bildet.

Die weitere Paarung 22 umfasst zudem ein weiteres stationäres Element 23, das als axial verschieblicher Gleitring ausgeführt ist.

Die weitere Gleitringdichtung weist einen Dichtspalt 24 zur Bildung eines Schmierfilms auf.

Auf das stationäre Element 15 der ersten Paarung 14 wirkt ein erstes Federelement 25. Dies übt eine Kraft in axialer Richtung aus. Das Federelement 25 stützt sich motorseitig an einem Gehäuseteil 26 ab.

Das Gehäuseteil 26 ist mit einem stationären Träger 27 über eine Klebeverbindung 28 verbunden.

Eine weitere Paarung 22 umfasst ein weiteres Federelement 29, das eine axiale Kraft auf das stationäre Element 23 der pumpenseitigen Gleitringdichtung ausübt.

Die pumpenseitige Paarung 22 und die motorseitige Paarung 14 bilden ein kompaktes Doppeldichtungsmodul.

Die Anordnung 1 bildet eine kompakte Baueinheit, die als Dichtungspatrone in die Öffnung des Gehäusedeckels 8 positioniert werden kann und mit O-Ringen 30 abgedichtet wird.

Das Doppeldichtungsmodul ist in Tandem-Anordnung ausgeführt.

## Patentansprüche

1. Anordnung (1) die eine Dichtung um eine Welle bereitstellt und aufweisend eine erste Paarung (14), die ein erstes rotierendes Element (16) und ein erstes stationäres Element (15) aufweist, die einen Dichtspalt (18) für einen Schmierfilm ausbilden, wobei die Anordnung (1) eine Wellenhülse (17) aufweist, wobei die Anordnung (1) eine weitere Paarung (22) mit einem weiteren rotierenden Element (21) und einem weiteren stationären Element (23) aufweist, zwischen denen ein Dichtspalt (24) für einen Schmierfilm angeordnet ist, wobei das erste rotierende Element (16) einstückig mit der Wellenhülse (17) ausgebildet ist, wobei die Anordnung (1) einen stationären Träger (27) und ein stationäres Gehäuseteil (26) umfasst, die miteinander verbunden sind, wobei das weitere stationäre Element (23) mit dem stationären Träger (27) in Verbindung steht, wobei das stationäre Element (15) von dem Gehäuseteil (26) zumindest teilweise umschlossen wird und die Wellenhülse (17) von einem ringartigen Element (19) gegen axiale Verschiebung gesichert ist,
wobei die Wellenhülse (17) mit einem rotierenden Trägerelement (20) in Verbindung steht, welches eine Begrenzung gegen axiale Verschiebungen bildet,
**dadurch gekennzeichnet, dass** die Wellenhülse (17) zwischen dem rotierenden Trägerelement (20) und dem ringartigen Element (19) fixiert ist.

2. Anordnung nach Anspruch 1, wobei die Anordnung (1) ein Federelement (25) zur Erzeugung einer Anpresskraft zwischen dem rotierenden Element (16) und dem stationären Element (15) der ersten Paarung (14) aufweist.

3. Anordnung nach Anspruch 2, wobei das Federelement (25) stationär ist.

4. Anordnung nach Anspruch 1, wobei die Anordnung (1) ein weiteres Federelement (29) zur Erzeugung einer Anpresskraft zwischen dem weiteren rotierenden Element (21) und dem stationären Element (23) der weiteren Paarung (22) aufweist.

5. Anordnung nach Anspruch 1 oder 4, wobei die Paarungen (14, 22) in Tandem-Anordnung zueinander positioniert sind.

6. Anordnung nach Anspruch 4 oder 5, wobei das weitere Federelement (29) stationär ist.

7. Anordnung nach einem der Ansprüche 1 bis 6, wobei es sich bei dem ringartigen Element (19) um einen Flachdraht-Sicherungsring handelt.

8. Anordnung nach einem der Ansprüche 2 bis 7, wobei das erste Federelement (25) zwischen dem stationären Element (15) und dem Gehäuseteil (26) angeordnet ist.

9. Anordnung nach Anspruch 1-8, wobei das weitere rotierende Element (21) mit dem rotierenden Trägerelement (20) in Verbindung steht.

10. Kreiselpumpeneinheit mit einem Gehäusedeckel (8), der eine Öffnung aufweist, in der eine Anordnung (1) nach einem der Ansprüche 1 bis 9 platziert ist.

## Claims

1. Arrangement (1) providing a seal around a shaft and having a first pairing (14) comprising a first rotating element (16) and a first stationary element (15) which form a sealing gap (18) for a lubricating film, wherein the arrangement (1) has a shaft sleeve (17), wherein the arrangement (1) has a further pairing (22) comprising a further rotating element (21) and a further stationary element (23) between which a sealing gap (24) for a lubricating film is arranged, wherein the first rotating element (16) is formed in one piece with the shaft sleeve (17), wherein the arrangement (1) comprises a stationary carrier (27) and a stationary housing part (26) which are connected to one another, wherein the further stationary element (23) is connected to the stationary carrier (27), wherein the stationary element (15) is surrounded at least partially by the housing part (26) and the shaft sleeve (17) is secured against axial displacement by a ring-like element (19),
wherein the shaft sleeve (17) is connected to a rotating carrier element (20) which forms a delimitation against axial displacements,
**characterized in that** the shaft sleeve (17) is fixed between the rotating carrier element (20) and the ring-like element (19).

2. Arrangement according to Claim 1, wherein the arrangement (1) has a spring element (25) for generating a pressing force between the rotating element (16) and the stationary element (15) of the first pairing (14).

3. Arrangement according to Claim 2, wherein the spring element (25) is stationary.

4. Arrangement according to Claim 1, wherein the arrangement (1) has a further spring element (29) for generating a pressing force between the further rotating element (21) and the stationary element (23) of the further pairing (22).

5. Arrangement according to Claim 1 or 4, wherein the pairings (14, 22) are positioned in a tandem arrangement with respect to one another.

6. Arrangement according to Claim 4 or 5, wherein the further spring element (29) is stationary.

7. Arrangement according to one of Claims 1 to 6, wherein the ring-like element (19) is a flat-wire securing ring.

8. Arrangement according to one of Claims 2 to 7, wherein the first spring element (25) is arranged between the stationary element (15) and the housing part (26).

9. Arrangement according to Claim 1-8, wherein the further rotating element (21) is connected to the rotating carrier element (20).

10. Centrifugal-pump unit having a housing cover (8) which has an opening in which an arrangement (1) according to one of Claims 1 to 9 is placed.

## Revendications

1. Agencement (1) qui fournit un joint d'étanchéité autour d'un arbre et présentant une première paire (14) qui présente un premier élément rotatif (16) et un premier élément fixe (15) qui forment une fente d'étanchéité (18) pour un film lubrifiant, l'agencement (1) présentant une chemise d'arbre (17), l'agencement (1) présentant une autre paire (22) comportant un autre élément rotatif (21) et un autre élément fixe (23) entre lesquels est agencée une fente d'étanchéité (24) pour un film lubrifiant, le premier élément rotatif (16) étant formé d'une seule pièce avec la chemise d'arbre (17), l'agencement (1) comprenant un support fixe (27) et une partie de carter fixe (26) qui sont reliés l'un à l'autre, l'autre élément fixe (23) étant en liaison avec le support fixe (27), l'élément fixe (15) étant entouré au moins partiellement par la partie de carter (26) et la chemise d'arbre (17) étant bloquée par un élément annulaire (19) de manière à empêcher un déplacement axial,
la chemise d'arbre (17) étant en liaison avec un élément de support rotatif (20), lequel forme une limitation vis-à-vis de déplacements axiaux,
**caractérisé en ce que** la chemise d'arbre (17) est fixée entre l'élément de support rotatif (20) et l'élément annulaire (19).

2. Agencement selon la revendication 1, l'agencement (1) présentant un élément ressort (25) servant à la génération d'une force de pression entre l'élément rotatif (16) et l'élément fixe (15) de la première paire (14) .

3. Agencement selon la revendication 2, l'élément ressort (25) étant fixe.

4. Agencement selon la revendication 1, l'agencement (1) présentant un autre élément ressort (29) servant à la génération d'une force de pression entre l'autre élément rotatif (21) et l'élément fixe (23) de l'autre paire (22).

5. Agencement selon la revendication 1 ou 4, les paires (14, 22) étant positionnées en agencement en tandem l'une par rapport à l'autre.

6. Agencement selon la revendication 4 ou 5, l'autre élément ressort (29) étant fixe.

7. Agencement selon l'une des revendications 1 à 6, l'élément annulaire (19) étant un anneau de blocage en fil plat.

8. Agencement selon l'une des revendications 2 à 7, le premier élément ressort (25) étant agencé entre l'élément fixe (15) et la partie de carter (26).

9. Agencement selon l'une des revendications 1 à 8, l'autre élément rotatif (21) étant en liaison avec l'élément de support rotatif (20).

10. Unité pompe centrifuge comportant un couvercle de carter (8) qui présente une ouverture dans laquelle est placé un agencement (1) selon l'une des revendications 1 à 9.
